# EUROPEAN PATENT SPECIFICATION

(11) **EP 1 523 405 B1**
(45) Date of publication and mention of the grant of the patent: **02.09.2009**
(21) Application number: 03755302.1
(22) Date of filing: 26.05.2003
(51) Int. Cl.: B29D 23/20, B65D 47/08

(54) **TUBE, METHOD AND TOOL FOR ITS MANUFACTURE**
TUBE, VERFAHREN UND WERKZEUG FÜR IHRE HERSTELLUNG
TUBE, PROCEDE ET DISPOSITIF DE FABRICATION ASSOCIES

(30) Priority: 27.05.2002 SE 0201572
(43) Date of publication of application: 20.04.2005
(73) Proprietor: TecTubes Sweden AB, 544 22 Hjo (SE); Schöttli AG, 8254 Basadingen (CH)
(72) Inventor: JÖNSSON, Sven-Ake, S-331 31 Värnamo (SE); SCHÖTTLI, Martin, CH-8254 Basadingen (CH)
(74) Representative: Romare, Laila Anette
(86) International application number: PCT/SE2003/000846
(87) International publication number: WO 2003/099544

(56) References cited:
- EP-A1- 1 048 582
- EP-A2- 1 116 567
- FR-A1- 2 731 983

## Description

### TECHNICAL FIELD

The invention relates to a tube made of polymer material and injection-moulded in one piece, comprising a tube body, a tube shoulder and a closure connected to the tube shoulder via a hinge, the tube shoulder having an emptying opening.

The invention also relates to a method for injection-moulding a tube comprising a tube shoulder having an emptying opening, a tube body and a closure connected to the tube shoulder via a hinge, which comprises the following steps:
a first polymer material is injected into a tool part in which the tube shoulder is moulded;
a second polymer material is injected into a tool part in which the closure is moulded.

The invention also relates to a tool for injection-moulding a tube made of polymer material comprising a tube body, a tube shoulder and a closure connected to the tube shoulder via a hinge, the tube shoulder having an emptying opening, which tool comprises a first tool part for moulding the tube shoulder and tube body and also a second tool part for moulding the closure, the tool parts comprising ingates for supplying the polymer material to the tool parts.

### BACKGROUND ART

Tubes of the abovementioned type are used for, for example, hygiene articles, cosmetics and foods. The contents of the tubes can consequently differ widely and may be, for example, soft cheese, caviar, hair-styling gel, toothpaste, shampoo, lotions and liquid soap.

Tubes consist essentially of the following parts : tube body, tube shoulder comprising a hole for extraction of material and also a seal to make it possible to reclose the hole. The tube body is the reservoir for the contents of the tube. The seal, or the lid, is often held together with the tube shoulder by a hinge.

For tubes, there are different requirements for the various parts of the tube.

In order to facilitate extraction of material from the tube body, this must be sufficiently flexible to be compressed by moderate pressure. The tube shoulder should be rigid enough that the hole will not collapse and thus prevent extraction of material. The seal is to be relatively rigid so as to achieve good functioning during opening andreclosing. In those cases where the tube has a hinge which connects the tube shoulder and the seal, there are further specific requirements for the material properties of the tube.

The material of the hinge must have such properties that it withstands repeated bending to and fro without breaking.

On account of the different and sometimes contradictory properties which are required for the various parts of a tube, tubes have conventionally been manufactured in two or more parts separately, which are then assembled.

The tube body has been manufactured from a more flexible material, the closure from a more rigid material, and the two parts have then been joined together in a subsequent step. It is a disadvantage, however, to have many steps in the manufacturing process. It has therefore been desirable to reduce the number of steps.

EP 1 048 582 and FR 2 731 983 seek to solve this problem by virtue of all the parts being injection-moulded in one piece.

Adopting this approach results in a simpler process but at the expense of the adaptation of the material to the function the tube part is to have. The material selected will have to represent a compromise between the different properties desired for the various parts.

Consequently, there is still a problem with injection-moulding in one step a tube which has the optimum material properties in each tube part.

### DISCLOSURE OF INVENTION

The abovementioned problems are solved by the invention by virtue of a tube as defined in claim 1.

According to a preferred embodiment of the invention, the material in the tube shoulder which has flowed in from the intake point in the closure is arranged at least partly around the emptying opening. If the material which is injected into the closure is a material which is more rigid than that which is injected into the tube shoulder, a tube with good material properties is obtained in this way. The tube body is soft and flexible and easy to use at the same time as the closure has adequate dimensional stability. By virtue of the more rigid material flowing into the tube shoulder and coming to surround the emptying opening, the tube shoulder is more rigid in precisely the area of the emptying opening. This means that the emptying opening stays open better in order to receive the pin which is arranged in the closure. Improved closing of the tube is obtained. With this technique, it is also possible to manufacture tubes with a very large diameter (>50 mm) on the tube shoulder, while the tube body is still manufactured from a soft and flexible material.

According to the invention, emptying opening means an opening out of which the contents of the tube are normally emptied. The fact that the tube comprises an emptying opening does not mean that the tube has to have an opening to the surrounding environment in the manufacturing, distribution or sale state. An emptying opening according to the invention can, when sold, be covered by a wafer closure or another type of guarantee seal which is broken by the consumer before use.

It is also possible within the scope of the invention to make arrangement such that the material which is injected into the closure flows out into the tube shoulder in different geometries and to different extents. According to one embodiment, the material in the tube shoulder which has flowed in from the intake point in the closure is arranged over a stabilizing area and thus contributes to the dimensional stability of the tube shoulder and/or reinforcement of the attachment of the hinge to the tube shoulder and/or reinforcement of the emptying opening. A greater inflow is necessary for reinforcement of the emptying opening than for reinforcement of the attachment of the hinge to the tube shoulder. An inflow of a few per cent helps to reinforce the attachment of the hinge to the tube shoulder, while an inflow of at least 10% is necessary in order to bring about appreciable reinforcement of the tube shoulder. According to a preferred embodiment, the inflow is 25%. Inflow in % means that the tube part consists to the percentage indicated of the material which has flowed in from the intake point in the closure.

It is also conceivable that the material which is injected into the closure could flow out over the entire tube shoulder, so that a tube shoulder consisting of two layers is produced. These two layers are interconnected by physical and/or chemical bonds. The layers thus form a partial, or a complete, laminate. This may be advantageous when a tube shoulder with considerably more rigid properties is required than can be achieved with only the material which is injected into the tube shoulder from the tool. According to a preferred embodiment, the intake point in the tube shoulder is arranged closely adjacent to the emptying opening when the opening is arranged centrally in the tube shoulder. This arrangement allows optimum spreading of the material during injection-moulding. In the event that the emptying opening is not arranged centrally in the tube shoulder, the intake point is preferably arranged centrally in the tube shoulder.

In order to obtain uniform spreading of material in the closure, before the material which is injected into the closure begins to be filled into the tube shoulder, the intake point in the closure is preferably arranged diametrically in relation to the point where the hinge is arranged on the closure.

In order for it to be possible to provide the various structural parts with different properties, the material which has flowed in through the intake point in the tube shoulder differs in chemical composition from that which has flowed into the intake point in the closure. The material which has flowed in through the intake point in the closure preferably has a melt flow index between 3 and 20 g/10 min., measured using the measuring method ISO 1113, and a density lying between 0.90 and 0.92 g/cm³, measured using the measuring method ISO 1183. The material which has flowed in through the intake point in the tube shoulder preferably has a melt flow index between 15 and 35 g/10 min., measured using the measuring method ASTM D-1238, and a density between 0.90 and 0.93 g/cm³, measured using the measuring method ASTM D-792. For example, the material which has flowed in through the tube shoulder is polyethylene, and the material which has flowed in through the closure is polypropylene.

According to the invention, a tube is manufactured by means of a method according to claim 9.

According to a preferred embodiment of the method, the polymer material which is injected into the closure is conveyed so far into the tube shoulder that it surrounds the emptying opening.

According to another embodiment, the first polymer material and the second polymer material are allowed to fuse together in the overlapping areas.

According to the invention, a tube is manufactured in a tool according to claim 12.

According to a preferred embodiment, the ingate in the first tool part is arranged diametrically in the tool part in relation to the part in which the connection to the second tool part is arranged.

The tube according to the invention is injection-moulded in one piece. A tube injection-moulded in one piece means that the tube has been moulded in a tool, without movements of the parts in the tool other than closing and opening of the tool. After the injection-moulding, the tube is finished and does not need to be joined together with other parts in a further step. The only joining-together carried out is when the tube body is welded or otherwise joined together with itself when filling with the contents takes place.

### DESCRIPTION OF FIGURES

Figure 1 shows a tube according to an embodiment of the invention, seen in perspective.
Figure 2 shows the tube in Figure 1 seen from the side.
Figure 3 shows the tube in Figure 1 seen from the side. The tube is turned through 90° in relation to the tube in Figure 2.
Figure 4 shows a cross section along the line IV-IV of the tube in Figure 3.
Figure 5 shows a tube according to an embodiment of the invention, seen from above, with the lid in its open position.
Figure 6 shows a tool for manufacturing a tube according to an embodiment of the invention.

### DETAILED DESCRIPTION OF THE INVENTION

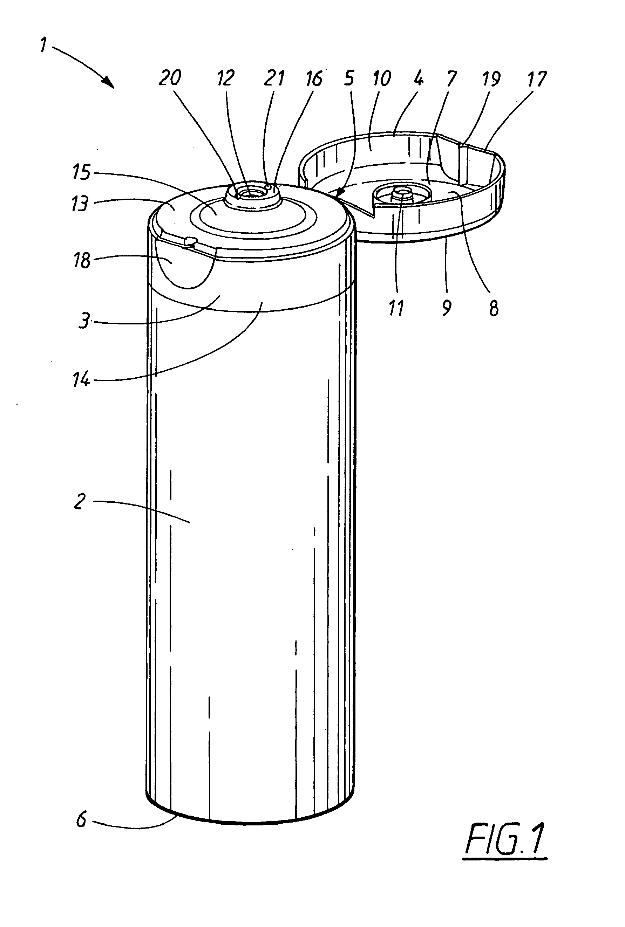

Figure 1 shows a tube 1 according to an embodiment of the invention, seen in perspective. The tube has a tube body 2 for enclosing the contents of the tube, a tube shoulder 3 for conveying the contents out, a closure 4 for closing the tube 1 in interaction with the tube shoulder 3, and a hinge 5 for connecting the closure 4 to the tube shoulder 3. The tube body 2 is cylindrical over its entire length. The tube 1 is shown in its injection-moulded state. Once the tube 1 has been filled with its contents, it is closed by virtue of the open end 6 of the tube body being welded together with itself, the lower part of the tube body 2 then having a flatter shape. The closure 4 is shown in Figure 1 in its open position. The closure 4 has an essentially circular base 7 which has an inner side 8 intended to face in towards the tube 1 when the tube 1 is closed and an outer side 9 intended to face outwards when the tube 1 is closed. The base 7 is surrounded by an edge 10 which closes against the tube shoulder 3 when the tube 1 is closed. Arranged centrally on the base 7 of the closure is a pin 11. This pin 11 is intended to fit into a central emptying opening 12 arranged in the tube shoulder when the tube 1 is closed. The other parts of the tube shoulder 3 also correspond to the other parts of the closure 4 for good contact between the closure 4 and the tube shoulder 3. The tube shoulder 3 has a base 13 of circular shape. At the perimeter of the base 13, the tube shoulder 3 meets the tube body 2. The tube body has an edge 14. In the centre of the base 13 of the tube shoulder, the base 13 merges via a conical inclined area 15 with a plateau 16 which protrudes from the base 13 of the tube shoulder. The central opening 12 is arranged in this plateau 16. The edge 10 of the closure has an essentially circular shape. Arranged in that part of the edge 10 which is arranged diametrically in the closure in relation to the hinge 5 is a first indentation 17. A corresponding second indentation 18 is arranged in the tube body 2. When the tube 1 is closed, the two indentations 17, 18 constitute a gripping surface for the consumer to use to open the tube 1.

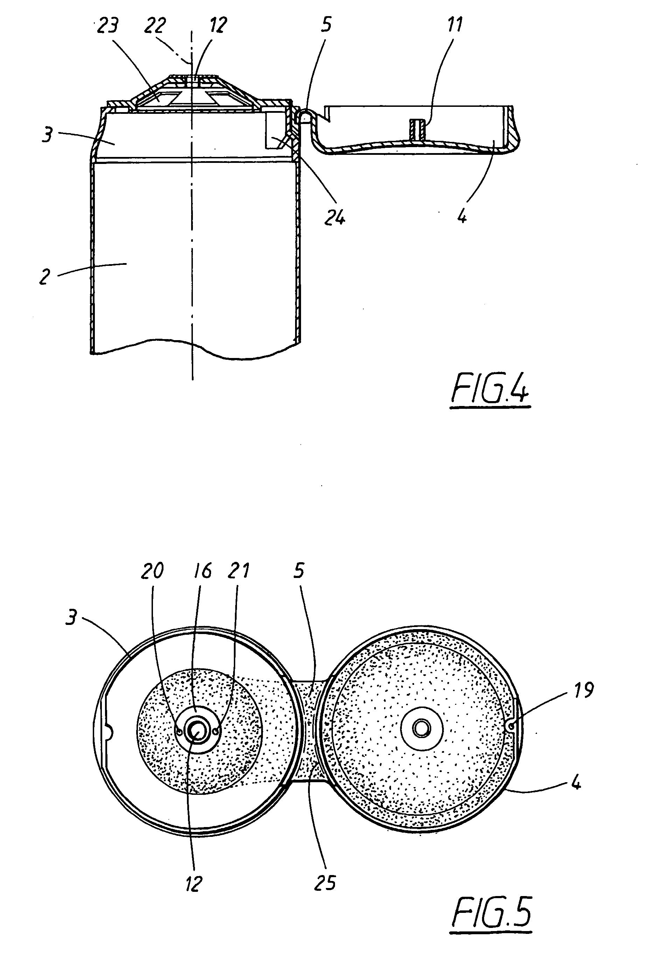

By virtue of the way the hinge 5 is designed in the closure 4, the closure 4 can essentially adopt two stable positions: open position and closed position. In the closed position, the closure 4 is essentially parallel to and located above the tube shoulder 3. In the open position, the closure 4 is also parallel to the tube shoulder 3, but turned through 180°. The design of the hinge 5 in the closure 4 is shown in Figure 5.

A first intake point 19 is positioned in the first indentation 17. An intake point is that point on an injection-moulded product through which the injection-moulded material has flowed into the product. The intake points correspond to the ingates on the injection-moulding tool. The ingates are the intake holes in the moulding tool through which the injection-moulded material is taken into the moulding tool in order to fill its cavity with material. The first intake point 19 is arranged diametrically in relation to the hinge 5 in the closure 4 in order to bring about uniform filling of the part of the tube 1 made of thicker material, the closure 4, before material begins to flow over into the part of thinner material, the tube shoulder 3. It is nevertheless possible within the scope of the invention to position the intake point for the closure elsewhere in the latter. It is also possible to arrange a number of intake points in the closure.

A second intake point 20 and a third intake point 21 are arranged in the tube shoulder 3. The intake points 20, 21 in the tube shoulder 3 are arranged adjacent to the central opening 12. Through these intake points 20, 21, material has flowed in order to form both the tube shoulder 3 and the tube body 2. The intake points 20, 21 are arranged diametrically in the plateau 16 in relation to the central opening 12. In the embodiment shown in Figure 1, the tube shoulder 3 has two intake points 20, 21. It is nevertheless possible within the scope of the invention to design the tube shoulder 3 with one intake point or more than two intake points.

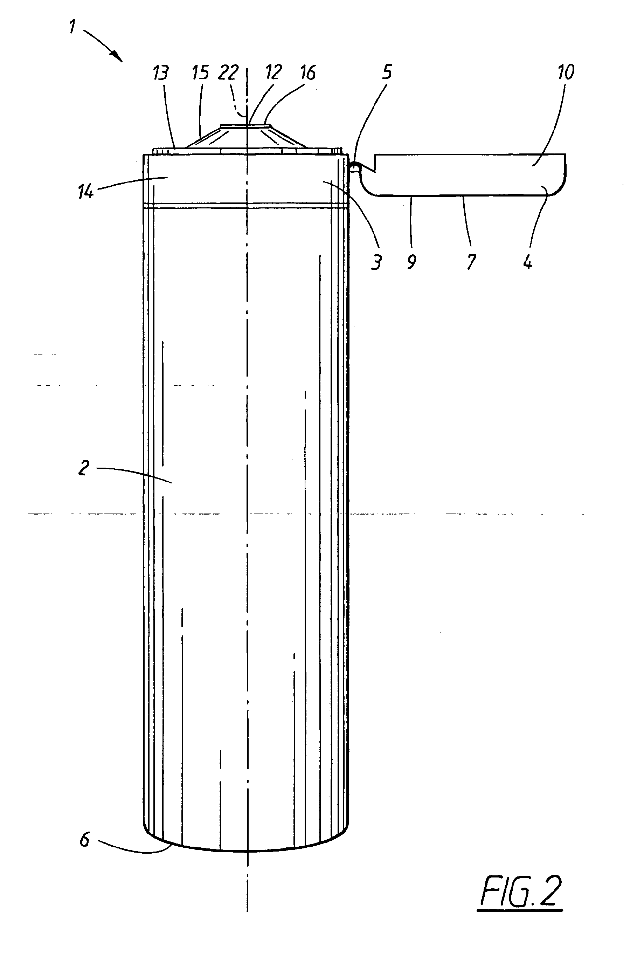

Figure 2 shows the tube 1 seen from the side. The closure 4 is in its open position. The tube 1 has an axial centre line 22 along which the central opening 12 is arranged.

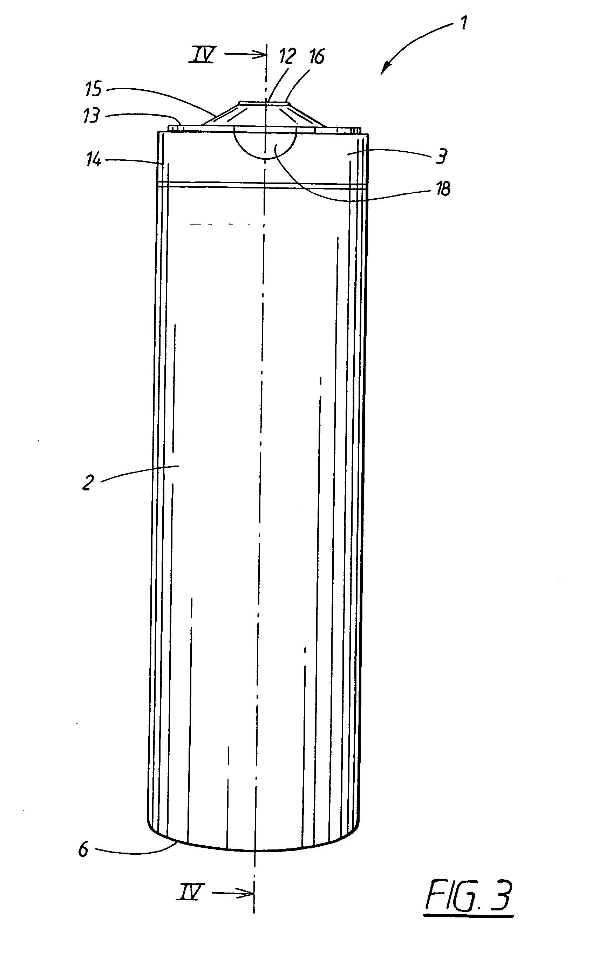

Figure 3 shows the tube 1 seen from the side in a view which is turned through 90° in relation to the view shown in Figure 2. Here, the indentation 18 arranged in the tube shoulder, the second indentation, is seen arranged centrally on the tube 1, positioned symmetrically in relation to the axial centre line 22. In Figure 3, the closure is not visible as it is on the other side of the tube in relation to the second indentation 18 and is concealed by the tube body 2.

Figure 4 shows a sectional view of the tube 1 along the section line IV-IV. The section line is coincident with the axial centre line 22. Figure 4 does not show the entire tube body 2.

In Figure 4, flow channels 23, arranged in the inclined area of the tube shoulder, for conveying material during the manufacturing process can be seen. The inclined area has four flow channels 23. Here, the hinge 5, which connects the closure 4 and the tube shoulder 3, is seen from the side. The hinge 5 is anchored in the tube shoulder 3 via a wedge-shaped anchoring means 24. The anchoring means 24 is intended to contribute a mechanical anchoring component in addition to the chemical or physical anchoring component according to the invention.

In order to illustrate the flow pattern of the material which has been injected through the first intake point, the flow path has been darkened. The embodiment of the invention shown in Figure 4 is that according to which the material which has been injected via the closure 4 has flowed out so that it surrounds the central opening 12 in the tube shoulder 3. The material which has flowed in through the intake points 20, 21 in the tube shoulder 3 is conveyed onward to the tube body 2 but not to the closure 4.

Figure 5 shows the same embodiment of the invention as Figure 4. Here, the tube 1 is seen from above, that is to say looking down into the central opening 12. Here, the spread of the material which has flowed in through the first intake point 19 is marked by small crosses. The material which has flowed in through the intake points 20, 21 in the tube shoulder 3 does not flow onward to the closure 4 and in Figure 5 consists of the white areas visible outside the spread of the material which has flowed in from the intake point 19 in the closure 4. The material which has flowed into the tube shoulder 3 through the intake points 20, 21 in the shoulder 3 covers the entire cross-sectional area of the tube shoulder 3 and therefore forms a superposed arrangement with the material which has flowed in from the closure 4. The material which has flowed in from the second intake point 20 and the third intake point 21 lies as a layer below the material which has flowed in from the first intake point 19, seen from above in the figure, and forms a layer structure with it, as described above.

The tube 1 is shown with the closure 4 in its open position in Figure 5 as well. As described above, the hinge 5, by virtue of the way it is designed in the closure 4, controls the closure 4 so that it can adopt essentially two stable positions: open position and closed position. In the closed position, the closure 4 is essentially parallel to and located above the tube shoulder 3. In the open position, the closure is also parallel to the tube shoulder 3, but turned through 180°. The bistable function of the closure 4 is brought about -by virtue of the fact that the hinge 5 is designed with an arc-shaped connecting line 25 in relation to the closure 4. The arc-shaped connecting line 25 will counteract positions other than 0 or 180° in relation to the starting position. The user will be compelled to use a certain degree of force in order to move the closure 4 out of either of the stable positions. However, once the closure 4 has been moved a little way, it snaps over into the other stable position.

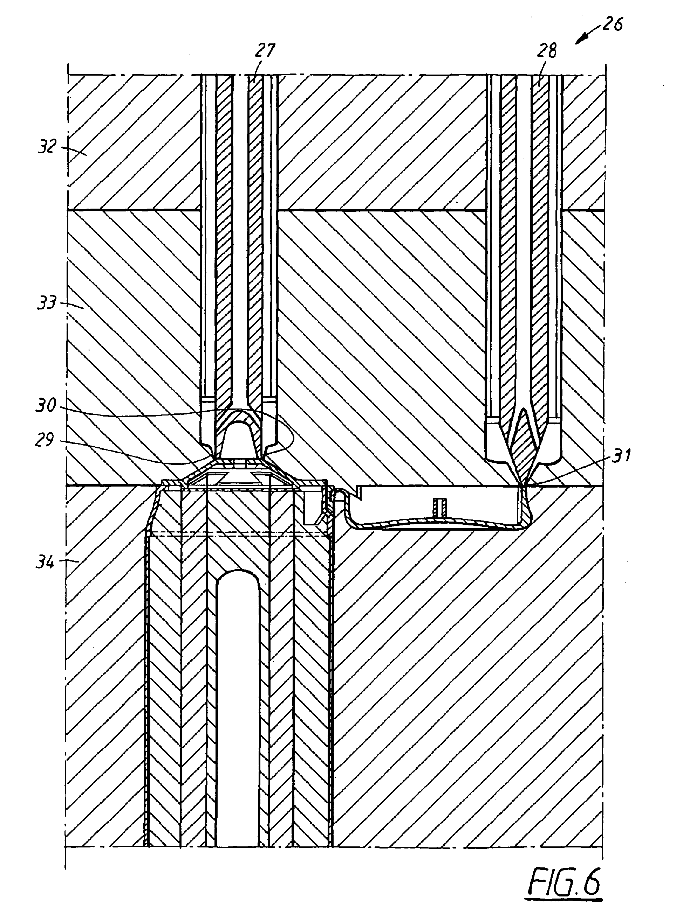

Figure 6 shows in cross section an injection-moulding tool 26 for manufacturing a tube 1 according to an embodiment of the invention. The tool 26 has mould parts for moulding the tube shoulder, the tube body, the closure and the hinge. The mould parts comprise a first mould plate 32, a second mould plate 33 and a third mould plate 34. The tool also has ingate nozzles for injecting molten plastic material into the tool. A first ingate nozzle 27 is arranged for injection of plastic material into the tube shoulder, and a second ingate nozzle 28 is arranged for injection of plastic material into the closure. The tool has a first ingate 29 and a second ingate 30 for injection of a first material into the tube shoulder 3, and an ingate 31 for injection of a second material into the closure 4. The first material is preferably polyethylene, and the second material is preferably polypropylene. Other compositions are nevertheless also possible within the scope of the invention. For example, the first and the second material can be made of the same polymer with different filler additions, different molecular weight or the like.
In the illustrative embodiments shown, the tubes have a circular cross section. However, the invention is equally applicable to tubes of different cross section, such as oval or rectangular.

In the illustrative embodiments shown, a tube is illustrated with an emptying opening arranged centrally in the tube shoulder. It is nevertheless possible within the scope of the invention to arrange an emptying opening which is not centred in the tube shoulder. This may be an advantage in order to make it easier to empty a tube of its last contents. The tube shoulder can have one, two or more intake points. These are preferably positioned centrally in the tube shoulder even if the emptying opening is arranged elsewhere.

As indicated above, the emptying opening according to the invention does not have to be open to the surrounding environment during manufacture, distribution or sale. The emptying opening can be covered by a wafer closure or another type of guarantee seal.

## Claims

1. A tube (1) made of polymer material and injection-moulded in one piece, comprising a tube body (2), a tube shoulder (3) and a closure (4) connected to the tube shoulder (3) via a hinge (5), the tube shoulder (3) having an emptying opening (12), **characterized in that** the tube shoulder (3) has at least one intake point (20;21) at which a first polymer material has been injected and **in that** the closure (4) has at least one intake point (19) at which a second polymer material has been injected, the tube shoulder (3) comprising material which has flowed in through intake points in both the tube shoulder (3) and the closure (4).

2. A tube according to Claim 1, **characterized in that** the material in the tube shoulder (3) which has flowed in from the intake point (19) in the closure (4) is arranged at least partly around the emptying opening (12).

3. A tube according to Claim 2, the tube shoulder (3) having a surface area, **characterized in that** the material in the tube shoulder (3) which has flowed in from the intake point (19) in the closure (4) is arranged over a stabilizing area and thus contributes to the dimensional stability of the tube shoulder (3) and/or reinforcement of the hinge (5) and/or reinforcement of the emptying opening (12).

4. A tube according to any one of the preceding claims, **characterized in that** the intake points (20;21) in the tube shoulder (3) are arranged closely adjacent to the emptying opening (12).

5. A tube according to any one of the preceding claims, **characterized in that** the intake point (20;21) in the closure (4) is arranged diametrically in relation to the point where the hinge (5) is arranged on the closure (4).

6. A tube according to any one of the preceding claims, **characterized in that** the material which has flowed in through the intake point (20;21) in the tube shoulder (3) differs in chemical composition from that which has flowed in through the intake point (19) in the closure (4).

7. A tube according to Claim 6, **characterized in that** material which has flowed in through the intake point (19) in the closure (4) has a melt flow index which is 3-20 g/10 min., measured using the measuring method ISO 1113, and a density which is 0.90 - 0.92 g/cm³, measured using the method ISO 1183, and **in that** the material which has flowed in through the intake point (20;21) in the tube shoulder (3) has a melt flow index which is 15 -35 g/10 min., measured using the measuring method ASTM D-1238, and a density which is 0.90 - 0.93 g/cm³, measured using the method ASTM D-792.

8. A tube according to Claim 6 or 7, **characterized in that** the material which has flowed in through the intake point (20;21) in the tube shoulder (3) is polyethylene, and the material which has flowed in through the intake point (19) in the closure (4) is polypropylene.

9. Method for injection-moulding in one piece a tube (1) comprising a tube shoulder (3) having an emptying opening (12), a tube body (2) and a closure (4) connected to the tube shoulder (3) via a hinge (5), which comprises the following steps:
- a first polymer material is injected into a tool part in which the tube shoulder (3) and the tube body (2) are moulded, the polymer material being injected through at least one ingate (29, 30) in the tool part in which the tube shoulder (3) and the tube body (2) are moulded;
- a second polymer material is injected into a tool part in which the closure (4) is moulded, the polymer material being injected through at least one ingate (31) in the tool part in which the closure (4) is moulded, **characterized in that** a portion of the polymer material which is injected into the tool part in which the closure (4) is moulded is conveyed onward into the tool part in which the tube shoulder (3) is moulded.

10. Method for injection-moulding a tube according to Claim 9, in which a part of the polymer material which is injected into the tool part in which the closure (4) is moulded is conveyed so far into the tool part in which the tube shoulder (3) is moulded that it surrounds the emptying opening (12).

11. Method according to Claim 9 or 10, in which the first polymer material and the second polymer material are allowed to fuse together in the overlapping areas.

12. Tool for injection-moulding in one piece a tube (1) made of polymer material comprising a tube body (2), a tube shoulder (3) and a closure (4) connected to the tube shoulder (3) via a hinge (5), the tube shoulder (3) having an emptying opening (12), which tool comprises a first tool part for moulding the tube shoulder (3) and tube body (2) and also a second tool part for moulding the closure (4), **characterized in that** each tool part comprises at least one ingate for supplying the polymer material to the tool parts.

13. Tool for injection-moulding according to Claim 12, **characterized in that** the ingate in the second tool part is arranged diametrically in the tool part in relation to the part in which the connection to the second tool part is arranged.

## Patentansprüche

1. Ein Tubus (1), der aus Polymermaterial gefertigt und in einem Stück spritzgegossen wird, umfassend einen Tubuskörper (2), eine Tubusschulter (3) und einen Verschluss (4), der über ein Scharnier (5) mit der Tubusschulter (3) verbunden ist, wobei die Tubusschulter (3) eine Entleerungsöffnung (12) aufweist, **dadurch gekennzeichnet, dass** die Tubusschulter (3) mindestens eine Einlassstelle (20; 21) aufweist, an der ein erstes Polymermaterial eingespritzt wurde, und dass der Verschluss (4) mindestens eine Einlassstelle (19) aufweist, an der ein zweites Polymermaterial eingespritzt wurde, wobei die Tubusschulter (3) Material umfasst, das durch die Einlassstellen sowohl in der Tubusschulter (3) als auch in dem Verschluss (4) eingeflossen ist.

2. Tubus gemäß Anspruch 1, **dadurch gekennzeichnet, dass** das Material in der Tubusschulter (3), das von der Einlassstelle (19) in dem Verschluss (4) eingeflossen ist, zumindest teilweise um die Entleerungsöffnung (12) herum angeordnet ist.

3. Tubus gemäß Anspruch 2, wobei die Tubusschulter (3) einen Oberflächenbereich hat, **dadurch gekennzeichnet, dass** das Material in der Tubusschulter (3), das von der Einlassstelle (19) in dem Verschluss (4) eingeflossen ist, über einem Stabilisierungsbereich angeordnet ist und damit zur Formbeständigkeit der Tubusschulter (3) und/oder zur Verstärkung des Scharniers (5) und/oder zur Verstärkung der Entleerungsöffnung (12) beiträgt.

4. Tubus gemäß einem der vorherigen Ansprüche, **dadurch gekennzeichnet, dass** die Einlassstellen (20; 21) in der Tubusschulter (3) in enger Nachbarschaft zur Entleerungsöffnung (12) angeordnet sind.

5. Tubus gemäß einem der vorherigen Ansprüche, **dadurch gekennzeichnet, dass** die Einlassstelle (20; 21) in dem Verschluss (4) diametral in Bezug auf die Stelle angeordnet ist, wo das Scharnier (5) an dem Verschluss (4) angeordnet ist.

6. Tubus gemäß einem der vorherigen Ansprüche, **dadurch gekennzeichnet, dass** das Material, das durch die Einlassstelle (20; 21) in der Tubusschulter (3) eingeflossen ist, in seiner chemischen Zusammensetzung von dem abweicht, das durch die Einlassstelle (19) in dem Verschluss (4) eingeflossen ist.

7. Tubus gemäß Anspruch 6, **dadurch gekennzeichnet, dass** das Material, das durch die Einlassstelle (19) in dem Verschluss (4) eingeflossen ist, einen Schmelzindex hat, der 3-20 g/10 min beträgt, gemessen mithilfe der Messmethode ISO 1113, und eine Dichte hat, die 0,90-0,92 g/cm³ beträgt, gemessen mithilfe der Methode ISO 1183, und dass das Material, das durch die Einlassstelle (20; 21) in der Tubusschulter (3) eingeflossen ist, einen Schmelzindex hat, der 15-35 g/10 min beträgt, gemessen mithilfe der Messmethode ASTM D-1238, und eine Dichte hat, die 0,90-0,93 g/cm³ beträgt, gemessen mithilfe der Methode ASTM D-792.

8. Tubus gemäß Anspruch 6 oder 7, **dadurch gekennzeichnet, dass** das Material, das durch die Einlassstelle (20; 21) in der Tubusschulter (3) eingeflossen ist, Polyethylen ist, und dass das Material, das durch die Einlassstelle (19) in dem Verschluss (4) eingeflossen ist, Polypropylen ist.

9. Verfahren zum Spritzgießen eines Tubus (1) in einem Stück, der eine Tubusschulter (3) mit einer Entleerungsöffnung (12), einen Tubuskörper (2) und einen Verschluss (4) umfasst, der über ein Scharnier (5) mit der Tubusschulter (3) verbunden ist, wobei das Verfahren die folgenden Schritte umfasst:
- ein erstes Polymermaterial wird in einen Werkzeugabschnitt gespritzt, in dem die Tubusschulter (3) und der Tubuskörper (2) geformt werden, wobei das Polymermaterial durch mindestens einen Einguss (29, 30) in dem Werkzeugabschnitt eingespritzt wird, in dem die Tubusschulter (3) und der Tubuskörper (2) geformt werden;
- ein zweites Polymermaterial wird in einen Werkzeugabschnitt gespritzt, in dem der Verschluss (4) geformt wird, wobei das Polymermaterial durch mindestens einen Einguss (31) in dem Werkzeugabschnitt eingespritzt wird, in dem der Verschluss (4) geformt wird, **dadurch gekennzeichnet, dass** ein Teil des Polymermaterials, das in den Werkzeugabschnitt eingespritzt wird, in dem der Verschluss (4) geformt wird, weiter in den Werkzeugabschnitt befördert wird, in dem die Tubusschulter (3) geformt wird.

10. Verfahren zum Spritzgießen eines Tubus gemäß Anspruch 9, wobei ein Teil des Polymermaterials, das in den Werkzeugabschnitt eingespritzt wird, in dem der Verschluss (4) geformt wird, so weit in den Werkzeugabschnitt hinein befördert wird, in dem die Tubusschulter (3) geformt wird, dass es die Entleerungsöffnung (12) umgibt.

11. Verfahren gemäß Anspruch 9 oder 10, wobei zugelassen wird, dass das erste Polymermaterial und das zweite Polymermaterial in den überlappenden Bereichen miteinander verschmelzen.

12. Werkzeug zum Spritzgießen eines Tubus (1) in einem Stück, der aus Polymermaterial gefertigt wird und einen Tubuskörper (2), eine Tubusschulter (3) und einen mit der Tubusschulter (3) über ein Scharnier (5) verbundenen Verschluss (4) umfasst, wobei die Tubusschulter (3) eine Entleerungsöffnung (12) aufweist, wobei das Werkzeug einen ersten Werkzeugabschnitt zum Formen der Tubusschulter (3) und des Tubuskörpers (2) und auch einen zweiten Werkzeugabschnitt zum Formen des Verschlusses (4) aufweist, **dadurch gekennzeichnet, dass** jeder Werkzeugabschnitt mindestens einen Einguss zur Zuführung des Polymermaterials in die Werkzeugabschnitte umfasst.

13. Werkzeug zum Spritzgießen gemäß Anspruch 12, **dadurch gekennzeichnet, dass** der Einguss in dem zweiten Werkzeugabschnitt diametral in dem Werkzeugabschnitt in Bezug auf den Abschnitt angeordnet ist, in dem die Verbindung mit dem zweiten Werkzeugteil angeordnet ist.

## Revendications

1. Tube (1) constitué d'un matériau de polymère et moulé par injection en une seule pièce, comprenant un corps de tube (2), un épaulement de tube (3) et une fermeture (4) reliée à l'épaulement du tube (3) par l'intermédiaire d'une charnière (5), l'épaulement de tube (3) comportant une ouverture de vidange (12), **caractérisé en ce que** l'épaulement de tube (3) comporte au moins un point d'admission (20 ; 21) au niveau duquel un premier matériau de polymère a été injecté et **en ce que** la fermeture (4) comporte au moins un point d'admission (19) au niveau duquel un deuxième matériau de polymère a été injecté, l'épaulement de tube (3) comprenant un matériau qui a été introduit par écoulement à travers les points d'admission à la fois dans l'épaulement de tube (3) et dans la fermeture (4).

2. Tube selon la revendication 1, **caractérisé en ce que** le matériau dans l'épaulement de tube (3) qui a été introduit par écoulement à partir du point d'admission (19) dans la fermeture (4) est disposé au moins en partie autour de l'ouverture de vidange (12).

3. Tube selon la revendication 2, l'épaulement de tube (3) comportant une aire de surface, **caractérisé en ce que** le matériau dans l'épaulement de tube (3) qui a été introduit par écoulement à partir du point d'admission (19) dans la fermeture (4) est disposé sur une zone de stabilisation et contribue donc à la stabilité dimensionnelle de l'épaulement de tube (3) et/ou au renforcement de la charnière (5) et/ou au renforcement de l'ouverture de vidange (12).

4. Tube selon l'une quelconque des revendications précédentes, **caractérisé en ce que** les points d'admission (20 ; 21) dans l'épaulement de tube (3) sont disposés à proximité étroite de l'ouverture de vidange (12).

5. Tube selon l'une quelconque des revendications précédentes, **caractérisé en ce que** le point d'admission (20 ; 21) dans la fermeture (4) est agencé diamétralement par rapport au point où l'articulation (5) est disposée sur la fermeture (4).

6. Tube selon l'une quelconque des revendications précédentes, **caractérisé en ce que** le matériau qui a été introduit par écoulement à travers le point d'admission (20 ; 21) dans l'épaulement de tube (3) est d'une composition chimique différente de celle du matériau qui a été introduit par écoulement à travers le point d'admission (19) dans la fermeture (4).

7. Tube selon la revendication 6, **caractérisé en ce que** le matériau qui a été introduit par écoulement à travers le point d'admission (19) dans la fermeture (4) présente un indice de fluidité à chaud qui est de 3 à 20 g/10 min., mesuré grâce au procédé de mesurage ISO 1113, et une masse volumique qui est de 0,90 à 0,92 g/cm³, mesurée grâce au procédé ISO 1183, et **en ce que** le matériau qui a été introduit par écoulement à travers le point d'admission (20 ; 21) dans l'épaulement de tube (3) présente un indice de fluidité à chaud de 15 à 35 g/10 min., mesuré grâce au procédé de mesurage ASTM D - 1238, et une masse volumique qui est de 0,90 à 0,93 g/cm³, mesurée grâce au procédé ASTM D - 792.

8. Tube selon la revendication 6 ou 7, **caractérisé en ce que** le matériau qui a été introduit par écoulement à travers le point d'admission (20 ; 21) dans l'épaulement de tube (3) est du polyéthylène, et le matériau qui a été introduit par écoulement à travers le point d'admission (19) dans la fermeture (4) est du polypropylène.

9. Procédé de moulage par injection en une seule pièce d'un tube (1) comprenant un épaulement de tube (3) ayant une ouverture de vidange (12), un corps de tube (2) et une fermeture (4) reliée à l'épaulement de tube (3) par l'intermédiaire d'une charnière (5), qui comprend les étapes suivantes :
- un premier matériau de polymère est injecté dans une partie d'outil dans laquelle l'épaulement de tube (3) et le corps de tube (2) sont moulés, le matériau de polymère étant injecté à travers au moins une entrée de coulée (29, 30) dans la partie d'outil dans laquelle l'épaulement de tube (3) et le corps de tube (2) sont moulés,
- un deuxième matériau de polymère est injecté à l'intérieur d'une partie d'outil dans laquelle la fermeture (4) est moulée, le matériau de polymère étant injecté à travers au moins une entrée de coulée (31) dans la partie d'outil dans laquelle la fermeture (4) est moulée, **caractérisé en ce qu'**une partie du matériau de polymère qui est injecté à l'intérieur de la partie d'outil dans laquelle la fermeture (4) est moulée, est acheminée vers l'avant à l'intérieur de la partie d'outil dans laquelle l'épaulement de tube (3) est moulé.

10. Procédé de moulage par injection d'un tube selon la revendication 9, dans lequel une partie du matériau de polymère qui est injecté à l'intérieur de la partie d'outil dans laquelle la fermeture (4) est moulée, est acheminée à l'intérieur de la partie d'outil dans laquelle l'épaulement de tube (3) est moulé jusqu'à ce qu'elle entoure l'ouverture de vidange (12).

11. Procédé selon la revendication 9 ou 10, dans lequel le premier matériau de polymère et le deuxième matériau de polymère sont amenés à fusionner ensemble dans les zones de chevauchement.

12. Outil destiné au moulage par injection en une seule pièce d'un tube (1) constitué d'un matériau de polymère comprenant un corps de tube (2), un épaulement de tube (3) et une fermeture (4) reliée à l'épaulement de tube (3) par l'intermédiaire d'une charnière (5), l'épaulement de tube (3) comportant une ouverture de vidange (12), lequel outil comprend une première partie d'outil destinée à mouler l'épaulement de tube (3) et le corps de tube (2) et également une deuxième partie d'outil destinée à mouler la fermeture (4), **caractérisé en ce que** chaque partie d'outil comprend au moins une entrée de coulée destinée à fournir le matériau de polymère aux parties de l'outil.

13. Outil de moulage par injection selon la revendication 12, **caractérisé en ce que** l'entrée de coulée dans la deuxième partie d'outil est disposée diamétralement dans la partie d'outil par rapport à la partie dans laquelle le raccord à la deuxième partie d'outil est disposé.
